# EUROPEAN PATENT SPECIFICATION

(11) **EP 3 315 528 B1**
(45) Date of publication and mention of the grant of the patent: **24.11.2021**
(21) Application number: 16196735.1
(22) Date of filing: 01.11.2016
(51) Int. Cl.: C08G 18/72, C08G 18/76, C08G 18/28, C08G 18/40, C08G 18/42, C09J 175/04, C09J 175/06, C08G 18/12, C08G 18/30, B29B 7/72

(54) **METHOD FOR REDUCING REST TACKINESS OF MOISTURE CURING POLYURETHANE HOT-MELT ADHESIVES**
VERFAHREN ZUR REDUZIERUNG DER RESTKLEBRIGKEIT VON FEUCHTIGKEITSHÄRTBAREN POLYURETHAN-HEISSSCHMELZKLEBSTOFFEN
PROCÉDÉ DE RÉDUCTION D'ADHÉRENCE AU REPOS D'ADHÉSIFS POLYURÉTHANES THERMOFUSIBLES DURCISSANT À L'HUMIDITÉ

(43) Date of publication of application: 02.05.2018
(73) Proprietor: Sika Technology AG, 6340 Baar (CH)
(72) Inventor: Janke, Doreen, 25486 Alveslohe (DE); Bien, Kathrin, 21337 Lüneburg (DE); Schmider, Martin, 22303 Hamburg (DE)
(74) Representative: Sika Patent Attorneys

(56) References cited:
- EP-A1- 0 755 414
- US-A1- 2004 079 482
- US-A1- 2004 194 881
- US-A1- 2016 083 540

## Description

### Technical field

The invention relates to method for reducing rest tackiness of moisture curing polyurethane hot-melt adhesives and to use of crystalline monofunctional alcohols in moisture curing polyurethane hot-melt adhesive compositions.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable curing of the adhesive by chemically crosslinking the polymers. Due to the cured polymer matrix the reactive hot-melts do not soften upon heating and these adhesives are, therefore, suitable for use also at elevated temperatures. The curing of the polymers can be initiated, for example, by heating or exposing the composition to atmospheric moisture or water. Moisture curing hot-melt adhesives typically contain polymers functionalized with isocyanate or silane groups, which enable the crosslinking of the polymer chains upon contact with water, such as atmospheric moisture.

Reactive polyurethane hot-melt (PU-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. These adhesives tend to develop a high initial adhesive strength immediately after application by cooling and acquire their ultimate properties, especially heat stability and resistance to environmental influences by the gradual curing process.

Some State-of-the-art PU-RHM adhesives are known to suffer from high rest tackiness, i.e. the adhesive film remains tacky after the open time. The high rest tackiness of an adhesive composition causes serious problems in applications, in which the adhesive is pre-applied to a substrate, such as a plastic foil, which is stored in rolls before being laminated to another substrate. In a modern high-throughput laminating process, such pre-coated foil should be wounded up in rolls as soon as possible after the open time of the applied adhesive in order to maximize the speed of production. A foil with a tacky adhesive film cannot be wounded up in rolls since the adhesive layer would stick to the upper surface of the adjacent foil in the roll and prevent, or at least make it difficult, to unwind the roll in the subsequent process step. If such foils having a tacky layer were used in a laminating process, part of the adhesive layer would remain as blocks on the opposite surface of the foil after unwinding of the roll. This so called blocking behavior of the hot-melt adhesive composition typically results in unscheduled production interruptions and quality inconsistences. Due to the high rest tackiness some state-of-the-art moisture curing PU-RHM adhesives are practically completely unsuitable for use as adhesives in laminating processes based on the use of foils having a pre-coated layer of adhesive.

There is thus a need for a method for reducing rest tackiness of moisture curing polyurethane adhesives

### Summary of the invention

The object of the present invention is to provide a method for reducing rest tackiness of moisture curing polyurethane hot-melt adhesive compositions.

In particular, it is an object of the present invention to provide a method by which the rest tackiness of a moisture curing polyurethane hot-melt adhesive composition can be reduced but which does not result in substantial impairment of the other adhesive properties, such as initial adhesion strength, thermal stability, and curing rate, of the hot-melt adhesive composition.

The objective can be achieved by the method as defined in claim 1.

It was surprisingly found out that the rest tackiness of conventional moisture curing polyurethane hot-melt adhesive can be drastically reduced by the addition of relatively small amounts of a crystalline monofunctional alcohol to mixture from which the moisture curing polyurethane hot-melt adhesive composition is prepared. Furthermore, it was surprisingly found out that the addition of crystalline monofunctional alcohol does not result in substantial impairment of the other adhesive properties, such as initial adhesion strength, thermal stability, and curing rate of the hot-melt adhesive composition. This result is unexpected since a person skilled in the art would expect the addition crystalline monofunctional alcohols to result at least in decreased curing rate and impaired thermal stability of the hot-melt adhesive composition.

According to a further aspect of the present invention, use of crystalline monofunctional alcohols in moisture curing polyurethane adhesive compositions for reducing rest tackiness is provided.

### Detailed description of the invention

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "monomer" designates a molecule having at least one polymerizable group. A monomeric di- or polyisocyanate contains in particular no urethane groups. Oligomers or polymer products of diisocyanate monomers such as adducts of monomeric diisocyanates are not monomeric diisocyanates. The monomeric di- or polyisocyanate has in particular a molecular weight of not more than 1000 g/mol, preferably not more than 500 g/mol, and more preferably not more than 400 g/mol.

The term "prepolymer" designates a polymer, which contains at least one, usually two or more, reactive group(s). For example, polyurethane prepolymer contains one or more unreacted isocyanate groups. By way of the reactive groups, the prepolymer may be chain-extended, crosslinked or cured.

The term "(meth)acrylic" designates methacrylic or acrylic. A (meth)acryloyl group is also known as (meth)acryl group. A (meth)acrylic compound can have one or more (meth)acryl groups (mono,- di-, tri- etc. functional (meth)acrylic compounds) and it may be a monomer, prepolymer, an oligomer, or a polymer.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties.

The term "softening point" or "softening temperature" designates a temperature at which compound softens in a rubber-like state, or a temperature at which the crystalline portion within the compound melts. The softening point can be measured by a ring and ball method according to DIN EN 1238.

The present invention relates in a first aspect of the invention to a method for reducing rest tackiness of a moisture curing polyurethane hot-melt adhesive composition by adding at least one crystalline monofunctional alcohol to a mixture from which the moisture curing polyurethane hot-melt adhesive composition is prepared.

The mixture into which the at least one crystalline monofunctional alcohol is added may contain one or more polyols and one or more monomeric polyisocyanates, preferably diisocyanates, and/or one or more isocyanate-functional polyurethane prepolymers. The at least one crystalline monofunctional alcohol may be first mixed with the one more polyols before the addition of the other reactants to the thus obtained mixture. Preferably, the ratio of isocyanate groups to hydroxyl groups in the mixture has a value of at least 1, preferably in the range of 1.5 - 2.5, most preferably 1.2 - 2.2.

Preferably, the amount of the at least one crystalline monofunctional alcohol in the mixture is 0.5 - 10.0 % by weight, preferably 0.5 - 7.5 % by weight, more preferably 1.0 - 5.0 % by weight, most preferably 1.0 - 3.0 % by weight, based on the total weight or the mixture. The amounts of crystalline monofunctional alcohol within the above defined ranges have been found to effectively reduce the tackiness of moisture curing hot-melt adhesive composition.

Suitable crystalline monofunctional alcohols include crystalline monalcohols, preferably alkyl alcohols such as linear polyethylene monoalcohols, having 20 - 100, preferably 25 - 50, most preferably 30 - 50 carbon atoms. Such crystalline monalcohols are available, for example, as Unilin® alcohols from Baker Hughes. In particular, suitable crystalline monofunctional alcohols have a melting point of at least 60°C, preferably at least 70°C. The crystalline monofunctional alcohols may have a melting point in the range from 60 to 130°C, preferably from 70 to 120°C, most preferably from 80 to 110°C.

The one or more polyols, the at least one crystalline monofunctional alcohol, the one or more monomeric polyisocyanates, and the one or more isocyanate-functional polyurethane prepolymers used in preparing the moisture curing polyurethane hot-melt adhesive may be the same as those elucidated below as component a), component b), component c) and component d), respectively, including the preferred embodiments identified there.

Preferably, the rest tackiness of the moisture curing polyurethane hot-melt adhesive composition is reduced to a value of less than 60 s, preferably less than 50 s, most preferably less than 40 s, by the addition of the at least one crystalline monofunctional alcohol.

The term "rest tackiness" refers to the length of the time period after the open time for which the adhesive remains tacky. In the context of the present invention, the rest tackiness of a hot-melt adhesive composition is determined using the measurement method as described below. Moisture curing hot-melt adhesive compositions having rest tackiness in the above stated ranges have been found especially suitable for use in high-throughput lamination processes, in which the substrate, such as a foil, is wounded up in a roll shortly after the application of the adhesive to the substrate.

### Method for determining the rest tackiness

The tested adhesive composition is placed in a sealed tube and preheated in an oven at a temperature of 140°C for a time period of 20 minutes. A sample of 20 g of the molten adhesive is applied with a doctor blade to surface of a silicone paper (B700 white, Laufenberg & Sohn KG) strip placed on a heating plate. The silicone paper has dimensions of 30 cm x 10 cm and the adhesive is applied as a film having a thickness of 500 µm and dimensions of 30cm x 6cm. Before applying the adhesive film, the silicone paper strip and the doctor blade are heated to a temperature of 150°C with the heating plate.

Immediately after application of the adhesive, the silicone paper strip is removed from the heating plate and placed (with the adhesive film facing upwards) on a sheet of plywood at normal room temperature (23°C). After the open time of the adhesive, which has been previously determined using the measurement method as described below, the rest tackiness is determined as follows: every 10 seconds a short strip of silicone paper having dimensions of 10 cm x 1 cm formed in a roll (non-siliconized surface facing outwards) is placed on the adhesive film and then slowly removed to separate the silicone paper strip from the adhesive film. In case the silicone paper strip cannot be easily separated from the adhesive film, the adhesive film is considered to be still tacky and the procedure is repeated after another time period of 10 seconds. In the opposite case, the adhesive film is considered to be non-tacky and the rest tackiness equals the time between the starting point of the measurement (end of open time) and the time of the last measurement.

The method for reducing rest tackiness of a moisture curing polyurethane hot-melt adhesive composition may comprise reacting one or more polyols, at least one crystalline monofunctional alcohol, and one or more monomeric polyisocyanates, preferably diisocyanates and/or one or more isocyanate-functional polyurethane prepolymers, the ratio of isocyanate groups to hydroxyl groups in the mixture having a value of at least 1, preferably in the range of 1.5 - 2.5, most preferably 1.2 - 2.2. The reaction may be carried out at typical prepolymerization reaction conditions, such as at temperatures of 140 °C, optionally in the presence of a catalyst.

Preferably, the method for reducing rest tackiness of a moisture curing polyurethane hot-melt adhesive composition comprises:
A) mixing one or more polyols as component a) with one or more crystalline monofunctional alcohols as component b),
B) adding one or more monomeric polyisocyanates, preferably diisocyanates as component c), and/or one or more isocyanate-functional polyurethane prepolymers as component d) to the mixture obtained in step A), the ratio of isocyanate groups to hydroxyl groups in the mixture having a value of at least 1, preferably in the range of 1.5 - 2.5, most preferably 1.2 - 2.2, and carrying out the reaction to obtain a reaction product comprising an isocyanate-functional polyurethane prepolymer modified with crystalline monofunctional alcohol, or

A) reacting one or more polyols as component a) and one or more monomeric polyisocyanates, preferably diisocyanates as component c) and/or one or more isocyanate-functional polyurethane prepolymers as component d), the ratio of isocyanate groups to hydroxyl groups in the mixture having a value of at least 2.5, preferably at least 3.0 to obtain an intermediate reaction product, and
B) adding one or more crystalline monofunctional alcohol as component b) to the intermediate reaction product and carrying out reaction to give a reaction product comprising an isocyanate-functional polyurethane prepolymer modified with crystalline monofunctional alcohol.

The mixing of components a) and b) is preferably conducted at an elevated temperature to give a homogeneous mixture, in particular at a temperature, for example, of at least 90 °C, preferably at least 110 °C, and more preferably at least 130 °C.

According to one or more embodiments, the method further comprises admixing at least one poly(meth)acrylate as component e), wherein the reaction between component a) and component c) and/or component d) is conducted in the presence of the at least one poly(meth)acrylate.

Preferably, the method comprises dissolving at least one polyether polyol in the at least one poly(meth)acrylate followed by addition of one or more polyols, preferably polyester polyols to the thus obtained mixture.

The method of the present invention has been found to be especially suitable for reducing rest tackiness of moisture curing polyurethane hot-melt adhesive compositions containing low amounts, in particular less than 5.0 % by weight, preferably less than 1.0 % by weight, of unreacted monomeric diisocyanates, based on the total weight of the moisture curing polyurethane hot-melt adhesive composition. Such polyurethane hot-melt adhesive compositions containing low amounts of unreacted diisocyanates have the advantage that they can be used as hot-melt adhesive in open line applications without exposing the users to emissions of monomeric diisocyanates.

Preferably, the moisture curing polyurethane hot-melt adhesive composition has a monomeric diisocyanate content of not more than 5.0 % by weight, preferably not more than 2.5 % by weight, most preferably not more than 1.0 % by weight.

### Component a)

One or more polyols may be used as component a). Preferred polyols are one or more polyether polyols, one or more polyester polyols, one or more polycarbonate polyols, and mixtures thereof. The preference given to different polyols depends on the application requirements. Preferred polyols are, for example, diols or triols or mixtures thereof. Particularly preferred are one or more diols, more particularly one or more polyether diols, one or more polyester diols, one or more polycarbonate diols, and mixtures thereof.

Particularly preferred polyols are one or more polyester polyols, for example, polyester triols and, in particular, polyester diols. Suitable polyester polyols are amorphous, semicrystalline or crystalline polyester polyols which are liquid at 25°C, such as polyester triols and especially polyester diols, and mixtures of these polyester polyols. Liquid polyols refer to polyols, which are liquid at a temperature of 25 °C. The preferred liquid polyester polyols have a melting point of between 0 to 25°C.

The polyol as component a) may be a mixture of a liquid polyester polyol, such as a polyester triol or, preferably, a polyester diol, with at least one amorphous, semicrystalline or crystalline polyester polyol, such as a polyester triol or more particularly a polyester diol. Preference can also be given to mixtures of one or more liquid polyester diols with one or more non-liquid amorphous, semicrystalline or crystalline polyester diols. Preferred polyols also include one or more amorphous polycarbonate diols, and also mixtures of polyester diols and polycarbonate diols.

Suitable polyester polyols, for example, polyester triols and especially polyester diols, have an average molecular weight of 1000 to 15000 g/mol, preferably of 1500 to 8000 g/mol, and more preferably of 1700 to 5500 g/mol.

Especially suitable polyester polyols, preferably polyester triols and especially polyester diols, are those which are prepared from dihydric to trihydric, preferably dihydric, alcohols, such as, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caproiactone, for example, also called polycaprolactones.

Particularly suitable polyester polyols are polyester polyols made from adipic acid, sebacic acid or dodecanedicarboxylic acid as dicarboxylic acid and from hexanediol or neopentyl glycol as dihydric alcohol. Further examples of suitable polyester polyols are polyester polyols of oleochemical origin. Polyester polyols of this kind may be prepared, for example, by complete ring opening of epoxidized triglycerides of a fat mixture comprising at least partly olefinically unsaturated fatty acid, with one or more alcohols having 1 to 12 C atoms, and by subsequent partial transesterification of the triglyceride derivatives to give alkyl ester polyols having 1 to 12 C atoms in the alkyl radical.

Particularly suitable crystalline or semicrystalline polyester polyols are adipic acid/hexanediol polyester and dodecanedicarboxylic acid/hexanediol polyesters. Suitable polycarbonate polyols are those as are obtainable by reaction, for example, of the abovementioned dihydric or trihydric alcohols - those used to synthesize the polyester polyols - with dialkyl carbonates, diaryl carbonates or phosgene. Polycarbonate diols are particularly suitable, especially amorphous polycarbonate diols. Other suitable polyols are castor oil and its derivatives or hydroxy-functional polybutadienes, which are available, for example, under the "Poly-bd" trade name.

Suitable polyether polyols, also called polyoxyalkylene polyols, are those which are polymerization products of ethylene oxide, 1,2-propylene oxide, 1,2- or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3-and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds. Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Particularly suitable polyether polyols are polyoxyalkylene diols or polyoxyalkylene triols, especially polyoxyethylene diols or polyoxyethylene triols. Especially suitable are polyoxyalkylene diols or polyoxyalkylene triols, more particularly polyoxypropylene diols and triols, having an average molecular weight in the range from 1000 to 30 000 g/mol, and also polyoxypropylene diols and triols having an average molecular weight of 400 to 8000 g/mol. Polyether polyols of these kinds are sold, for example, under the Acclaim® and Desmophene trade names by Bayer AG.

Likewise, particularly suitable are so-called "EO-endcapped" (ethylene oxide-endcapped) polyoxypropylene diols or triols. The latter are special polyoxypropylene-polyoxyethylene polyols, which are obtained, for example, by alkoxylating pure polyoxypropylene polyols with ethylene oxide after the end of the polypropoxylation process, and which therefore have primary hydroxyl groups.

The amount of the one or more polyols as component a) is not subject to any particular restrictions except that the amount of the polyols should be selected such that the requirement for the defined ratio of isocyanate groups to hydroxyl groups is fulfilled. The amount of the one or more polyols as component a) can be 20.0 - 70.0 % by weight, preferably 30.0 - 70.0 % by weight, more preferably 35.0 - 65.0 % by weight, most preferably 40.0 - 60.0 % by weight, based on the total weight of the components a) to e).

### Component b)

One or more crystalline monofunctional alcohols can be used as component b). Suitable crystalline monofunctional alcohols include crystalline monoalcohols, preferably alkyl alcohols such as linear polyethylene monoalcohols, having 20 - 100, preferably 25 - 50, most preferably 30 - 50 carbon atoms. Such crystalline monalcohols are available, for example, as Unilin® alcohols from Baker Hughes. In particular, suitable crystalline monofunctional alcohols have a melting point of at least 60 °C, preferably at least 70°C. The crystalline monofunctional alcohols may have a melting point in the range from 60 to 130°C, preferably from 70 to 120°C, most preferably from 80 to 110°C.

Preferably, the amount of the crystalline monofunctional alcohol as component b) is 0.5 - 10.0 % by weight, more preferably 0.5 - 7.5 % by weight, even more preferably 1.0 - 5.0 % by weight, most preferably 1.0 - 3.0 % by weight, based on the total weight of the components a) to e). The amounts of crystalline monofunctional alcohol within the above defined ranges have been found to effectively reduce the tackiness of moisture curing polyurethane hot-melt adhesive composition.

Moisture curing polyurethane hot-melt adhesive compositions prepared from mixtures comprising crystalline monofunctional alcohol as component b) in the amounts within the above defined ranges have been found to have particularly low rest tackiness. Such moisture curing polyurethane hot-melt adhesive compositions have also been found to provide good adhesion strength, thermal stability and fast curing rate.

### Component c)

One or more monomeric polyisocyanates, preferably monomeric diisocyanates, can be used as component c). Suitable monomeric polyisocyanates include aliphatic, cycloaliphatic or aromatic polyisocyanates, in particular diisocyanates. It is possible to use the customary monomeric polyisocyanates or diisocyanates that are available commercially.

Examples of suitable monomeric diisocyanates include1,6-hexamethylene diisocyanate (HDI), 2-methylpenta-methylene 1,5-diisocyanate, 2,2,4- and 2,4,4-trimethyl-1,6-hexamethylene diisocyanate (TMDI) and mixtures of these isomers, 1,10-decamethylene diisocyanate, 1,12-dodecamethylene diisocyanate, lysine diisocyanate and lysine ester diisocyanate, cyclohexane 1,3- and 1,4-diisocyanate and mixtures of these isomers, 1-methyl-2,4- and - 2,6-diisocyanatocyclohexane and mixtures of these isomers (HTDI or H6TDI), 1-isocyanato-3,3,5-trimethyl-5-isocyanatomethylcyclohexane (i.e., isophorone diisocyanate or IPDI), perhydro-2,4'- and -4,4'-diphenylmethane diisocyanate (HMDI or H12MDI) and mixtures of these isomers, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI) and mixtures of these isomers, m- and p- tetramethyl-1,3- and -1,4-xylylene diisocyanate (m- and p-TMXDI) and mixtures of these isomers, bis(1-isocyanato-1-methylethyl)naphthalene, 2,4- and 2,6-toluylene diisocyanate and mixtures of these isomers (TDI), 4,4'-, 2,4'- and 2,2'-diphenylmethane diisocyanate and mixtures of these isomers (MDI), 1,3- and 1,4-phenylene diisocyanate and mixtures of these isomers, 2,3,5,6-tetramethyl-1,4-diisocyanatobenzene, naphthalene 1,5-diisocyanate (NDI), 3,3'-dimethyl-4,4'-diisocyanatobiphenyl (TODI), dianisidine diisocyanate (DADI), and also mixtures of the aforesaid isocyanates. For the formulation of light-stable compositions, preference is given to using aliphatic and cycloaliphatic polyisocyanates.

Preferred monomeric diisocyanates include MDI, TDI, HDI, and IPDI, MDI and in particular, 4,4'-diphenylmethane diisocyanate (4,4'-MDI) and IPDI being especially preferred.

Preferably, the monomeric polyisocyanate, preferably the monomeric diisocyanate, has a molecular weight of not more than 500 g/mol, more preferably not more than 400 g/mol.

Preferably, the amount of the one or more monomeric polyisocyanates, preferably diisocyanates, as component c) is 5.0 - 50.0 % by weight, preferably 5.0 - 40.0 % by weight, more preferably 10.0 - 30.0 % by weight, most preferably 10.0 - 25.0 % by weight, based on the total weight of the components a) to e).

### Component d)

One or more isocyanate-functional polyurethane prepolymers can be used as component d) in the present invention. The isocyanate-functional polyurethane prepolymer is obtained in the usual way from reaction of polyols with stoichiometric excess of polyisocyanates in the presence of a catalyst. The isocyanate-functional polyurethane prepolymers prepared by conventional processes are known to contain significant amounts of unconverted monomeric polyisocyanates, such as diisocyanates, the amount being in general more than 1.0 % by weight of the reaction product. The monomeric polyisocyanate which is a reactant for the polyurethane prepolymer and which may be present in the reaction product, has in particular a molecular weight of not more than 1000 g/mol, preferably not more than 500 g/mol, and more preferably not more than 400 g/mol.

Preferably, the amount of the isocyanate-functional polyurethane prepolymer as component d) is 10.0 - 50.0 % by weight, more preferably 10.0 - 30.0 % by weight, most preferably 10.0 - 20.0 % by weight, based on the total weight of the components a) to e).

It may be advantageous that the one or more isocyanate-functional polyurethane prepolymer used as component d) has a monomeric diisocyanate content of less than 1.0 % by weight. Preferably, the one or more isocyanate-functional polyurethane prepolymer has a monomeric diisocyanate content of not more than 0.5 % by weight, more preferably not more than 0.15 % by weight. It may also be substantially free from monomeric diisocyanates. The isocyanate-functional polyurethane prepolymer having a monomeric diisocyanate content of less than 1.0 % by weight is referred below as "polyurethane prepolymer with low monomer content".

The isocyanate-functional polyurethane prepolymer with low monomer content is prepared in the usual way by reacting of one or more polyols and one or more monomeric polyisocyanates in the presence of a catalyst. Processes for preparing isocyanate-functional polyurethane prepolymers with low monomer content are disclosed in prior art and these are hereby referenced. Reference is made in particular to the use of specific diisocyanates having isocyanate groups of different reactivities, such as WO 03/033562 A1, WO 03/006521 A1, and WO 03/055929 A1, for example; the use of adducts or oligomers of the monomeric polyisocyanates, as described in WO 01/40342 A1 and DE 4429679 A1, for example; and the after treatment of the isocyanate-functional polyurethane prepolymers prepared by a conventional process, by distillation or extraction in order to reduce the residual monomeric polyisocyanate content of the reaction product, as described in WO 01/14443 A1, WO 01/40340 A2, US 6133415, DE 19616046 A1 or EP 0337898 A1, for example. The isocyanate-functional polyurethane prepolymers with low monomer content obtainable by these processes can be used as component d). Isocyanate-functional polyurethane prepolymers with low monomer content of this kind are also available commercially.

The polyols and polyisocyanates which may be used for preparing the polyurethane prepolymers with low monomer content may be the same as those described above as the component a) and the component c), including the preferred embodiments identified there, with the proviso that the selection is confined in this respect with regard to the abovementioned techniques using specific polyisocyanates. Preferred isocyanate-functional polyurethane prepolymers with low monomer content are those in which the monomer content has been reduced by extraction or, in particular, distillation. The distillation may take place, for example, by stripping on a thin-film evaporator.

Particularly preferred as isocyanate-functional polyurethane prepolymer with low monomer content as component d) is a reaction product of at least one polyol and at least one monomeric diisocyanate, the residual monomeric diisocyanate having been removed by distillation or extraction to a residual content of below 1.0 % by weight, preferably not more than 0.5 % by weight, more preferably not more than 0.15 % by weight, based on the total weight of the reaction product.

The isocyanate-functional polyurethane prepolymer having a monomeric diisocyanate content of less than 1.0 % by weight is preferably obtained as a reaction product of at least one polyol and at least one monomeric diisocyanate, wherein the polyol is a polyether polyol, preferably a polypropylene glycol, or a liquid polyester polyol, and the monomeric diisocyanate is preferably selected from the group consisting of MDI, TDI, HDI, and IPDI, more preferably 4,4'-MDI and IPDI, and wherein the monomeric diisocyanate has subsequently been reduced or largely removed from the reaction product by extraction or, in particular, distillation.

In particular preference is given to using isocyanate-functional polyurethane prepolymers having a monomeric diisocyanate content of less than 1.0 % by weight obtained by reaction of a polyether polyol, such as polypropylene ether glycol, and MDI with subsequent removal of unconverted MDI from the reaction product. Polyurethane prepolymer with low monomer content of this kind is available commercially as Desmodur® LS 2397 from Bayer Material Science. Desmodur® LS 2397 has a MDI monomer content of not more than 0.15 % by weight and an average molecular weight of 1100-1500 g/mol.

Preferably, the amount of the isocyanate-functional polyurethane prepolymer having monomeric diisocyanate content of less than 1.0 % by weight as component d) is 10.0 - 70.0 % by weight, preferably 25.0 - 70.0 % by weight, more preferably 35.0 - 65.0 % by weight, most preferably 40.0 - 60.0 % by weight, based on the total weight of the components a) to e).

### Component e)

One or more poly(meth)acrylates can be used as component e). The poly(meth)acrylate is a homopolymer or copolymer of at least one (meth)acrylic acid ester optionally and one or more further comonomers. Suitable (meth)acrylic acid esters include C₁-C₁₂-alkyl(meth)acrylates, preferably C₁-C₄-alkyl(meth)acrylates. Preferable acrylic acid esters and methacrylic acid esters do not contain further functional groups such as hydroxyl- and carboxyl groups.

Acrylic acid esters and methacrylic acid esters containing hydroxyl- and/or carboxyl groups can, however, be used in combination with acrylic acid esters and methacrylic acid esters without further functional groups.

Suitable (meth)acrylic acid esters include methylacrylate, ethylacrylate, n-butylacrylate, tert-butylacrylate, iso-butylacrylate, 2-ethylhexylacrylate, laurylacrylate, methylmethacrylate, ethylmethacrylate and n-butylmethacrylate. Suitable (meth)acrylic acid esters with further functional groups include maleic acid, 2-hydroxyethylacrylate, 2-hydroxyethylmethacrylate, hydroxypropylacrylate, propylene glycol methacrylate, butanediol monoacrylate and butanediol monomethacrylate.

Examples of suitable further comonomers include styrene, acrylonitrile, vinyl acetate, vinyl propionate and vinyl chloride. Examples of suitable auxiliary comonomers, which are typically used only in low amounts, include acrylic acid, methacrylic acid, itaconic acid, maleic acid, fumaric acid, crotonic acid and amides thereof.

Preferred poly(meth)acrylates include copolymers obtained by radical polymerization of one or more acrylic acid esters and/or methacrylic acid esters optionally in combination with one or more hydroxyl-functional acrylic acid esters and/or hydroxyl-functional methacrylic acid esters.

Preferably, the poly(meth)acrylate is a homopolymer or copolymer of at least one (meth)acrylic acid ester, hydroxyl-functional (meth)acrylic acid ester or a combination thereof and at least one further comonomer, wherein at least one (meth)acrylic acid ester does not contain further functional groups.

Preferably, the poly(meth)acrylate is a copolymer of methylmethacrylate and n-butylmethacrylate and at least one further comonomer, such as hydroxyl-functional (meth)acrylic acid ester.

Suitable poly(meth)acrylates are available commercially as Dynacoll®AC from Evonik.

Preferably, the poly(meth)acrylate has an average molecular weight of 10000 to 200000 g/mol, more preferably 20000 to 150000 g/mol.

Preferably, the amount of the one or more poly(meth)acrylates as component e), if used, is 10.0 - 50.0 % by weight, more preferably 15.0 - 45.0 % by weight, most preferably 15.0 - 40.0 % by weigh, based on the total weight of components a) to e).

The preferences given above for the components a) to e) and their amounts apply equally to all aspects of the invention.

According to another aspect of the present invention, a use of one or more crystalline alcohols in a moisture curing polyurethane hot-melt adhesive composition for reducing rest tackiness of the adhesive composition, is provided.

Suitable crystalline monofunctional alcohols to be used include crystalline monalcohols, preferably alkyl alcohols such as linear polyethylene monoalcohols, having 20 - 100, preferably 25 - 50, most preferably 30 - 50 carbon atoms. Such crystalline monalcohols are available, for example, as Unilin® alcohols from Baker Hughes. In particular, suitable crystalline monofunctional alcohols have a melting point of at least 60°C, preferably at least 70°C. The crystalline monofunctional alcohols may have a melting point in the range from 60 to 130 °C, preferably from 70 to 120 °C, most preferably from 70 to 100 °C.

Preferably, the moisture curing polyurethane hot-melt composition is obtainable by reacting one or more polyols, at least one crystalline monofunctional alcohol, and one or more monomeric polyisocyanates, preferably diisocyanates and/or one or more isocyanate-functional polyurethane prepolymers, the ratio of isocyanate groups to hydroxyl groups in the mixture having a value of at least 1, preferably in the range of 1.5 - 2.5, most preferably 1.2 - 2.2. The reaction may be carried out at typical prepolymerization reaction conditions, such as at temperatures of 140°C, optionally in the presence of a catalyst.

Preferably, the moisture curing polyurethane hot-melt composition is obtainable by a process comprising:
A) mixing one or more polyols as component a) with one or more crystalline monofunctional alcohols as component b),
B) adding one or more monomeric polyisocyanates, preferably diisocyanates as component c), and/or one or more isocyanate-functional polyurethane prepolymers as component d) to the mixture obtained in step A), the ratio of isocyanate groups to hydroxyl groups in the mixture having a value of at least 1, preferably in the range of 1.5 - 2.5, and carrying out the reaction to obtain a reaction product comprising an isocyanate-functional polyurethane prepolymer modified with crystalline monofunctional alcohol, or

A) reacting one or more polyols as component a) and one or more monomeric polyisocyanates, preferably diisocyanates as component c), and/or one or more isocyanate-functional polyurethane prepolymers as component d), the ratio of isocyanate groups to hydroxyl groups in the mixture having a value of at least 2.5, preferably at least 3.0 to obtain an intermediate reaction product, and
B) adding at least one crystalline monofunctional alcohol as component b) to the intermediate reaction product and carrying out reaction to give a reaction product comprising an isocyanate-functional polyurethane prepolymer modified with crystalline monofunctional alcohol.

The mixing of components a) and b) is preferably conducted at an elevated temperature to give a homogeneous mixture, in particular at a temperature, for example, of at least 90°C, preferably at least 110°C, and more preferably at least 130°C.

According to one or more embodiments, the method further comprises admixing at least one poly(meth)acrylate as component e), wherein the reaction between component a) and component c) and/or component d) is conducted in the presence of the at least one poly(meth)acrylate.

Preferably, the method comprises dissolving at least one polyether polyol in the at least one poly(meth)acrylate followed by addition of one or more polyols, preferably polyester polyols to the thus obtained mixture.

It has been found that the crystalline monoalcohols are especially suitable for reducing rest tackiness of moisture curing polyurethane hot-melt adhesive compositions comprising low amounts of unreacted monomeric diisocyanates.

The moisture curing polyurethane hot-melt composition has preferably a monomeric diisocyanate content of not more than 5.0 % by weight, more preferably not more than 2.5 % by weight, most preferably not more than 1.0 % by weight.

### Examples

The followings compounds and products shown in Table 1 were used in the examples.

**Table 1**

| | | |
|---|---|---|
| Fineplus® HM 1853 | Amorphous polyester polyol, glass transition temperature 30 °C | DIC Performance Resins GmbH |
| Fineplus® HM 1805 | Amorphous polyester polyol, glass transition temperature 50 °C | DIC Performance Resins GmbH |
| Fineplus® HM 2686 | Liquid polyester polyol, glass transition temperature -30 °C | DIC Performance Resins GmbH |
| Dynacoll® 7380 | Crystalline polyester polyol, melting point 70 °C | Evonik Industries |
| Dynacoll® 7360 | Crystalline polyester polyol, melting point 55 °C | Evonik Industries |
| Dynacoll® 7150 | Amorphous polyester polyol, softening point 95 °C | Evonik Industries |
| Hoopol® F-810 | Liquid polyester polyol | Danquinsa GmbH |
| Pearlbond® 501 | Polycaprolactone-copolyester polyurethane, melting point 65 °C | Lubrizol Advanced Materials |
| Desmophen 3600Z MX | Liquid polyether polyol | Bayer |
| Dynacoll AC 1920 | Polyacrylate, softening point 160 °C | Evonik Industries |
| Unilin® 350 | Monoalcohol, melting point 67.8-87.8 | Baker Hughes |
| Unilin® 550 | Monoalcohol, melting point 93.1-104.7 | Baker Hughes |
| Unilin® 700 | Monoalcohol, melting point 101.7-110 | Baker Hughes |
| Jeffcat® DMDLS | Dimorpholinodiethylether catalyst | Huntsman |
| Lupranat® ME | 4,4'-diphenylmethane diisocyanate (MDI) | BASF |
| Desmodur® LS 2397 | NCO-functional polyurethane prepolymer based on polypropylene ether glycol and MDI, MDI monomer content ≤ 0.15 wt.-%, Mₙ 1100-1500 g/mol | Bayer |
| Silanil® 442 | G-mercaptopropyltrimethoxysilane, liquid | BRB International BV |

### Tested hot-melt adhesive compositions

The compositions of Ex 1-Ex 6, Ex 8 and Ex 10 are exemplary formulations whereas C Ex 7, C Ex 9 and C Ex 11 are comparative formulations corresponding to the state-of-the-art hot-melt adhesive compositions with high rest tackiness.

The hot-melt adhesive compositions presented in Table 2 were prepared according to the procedures as presented below.

### Preparation of adhesive compositions Ex 1 to C Ex 7

A mixture the polyol component and the crystalline alcohol component in the quantities as presented in Table 2 was charged to a 200 g tin can of a standard laboratory reactor equipped with a nonstick coating and a four-neck lid with ground glass joints. This initial charge was molten and kept at a controlled temperature of 140°C for 2 hours.

The molten mixture thus obtained was dewatered under high vacuum with stirring (∼80 rpm) for one hour, while maintaining the temperature at 140°C. Then the polyurethane prepolymer component was added to the reactor and the resulting mixture was reacted with stirring for 1 hour at a temperature of 140°C. After this step the monomeric di-isocyanate component (MDI) was added to the reactor and mixed under vacuum and stirring for 20 minutes at a temperature of 140°C. The obtained reaction product was filled in tubes and stored at room temperature in the absence of moisture.

### Preparation of adhesive compositions Ex 8 and C Ex 9

A mixture of the polyacrylate and polyether components in the quantities presented in Table 2 was charged into a 200 g tin can of a standard lab reactor equipped with a nonstick coating and a four-neck lid with ground glass joints. The mixture was kept under vacuum with stirring (∼80 rpm) at a temperature of 160°C for 1 hour until the polyacrylates had been dissolved (in polyether). After the polyacrylates were dissolved, the temperature of the reactor was reduced to 140°C. Then polyester and crystalline alcohol component were added to reactor and the resulting mixture was dewatered under high vacuum with stirring (∼80rpm) for an hour, maintaining the temperature at 140°C.

The monomeric di-isocyanate (MDI) component was then added to the reactor and the resulting mixture was reacted under stirring for 1 hour at a temperature of 140°C. After the reaction step, the catalyst was added to the reactor and mixed under vacuum with stirring for 20 minutes at a temperature of 140°C. The obtained reaction product was filled in tubes and stored at room temperature in the absence of moisture.

### Preparation of adhesive compositions Ex 10 and C Ex 11

A mixture of the polyol component and the crystalline alcohol component in the quantities as presented in Table 2 was charged to a 200 g tin can of a standard laboratory reactor equipped with a nonstick coating and a four-neck lid with ground glass joints. This initial charge was molten and kept at a controlled temperature of 140°C for 2 hours.

The liquid mixture thus obtained was dewatered in under high vacuum with stirring (∼80 rpm) for one hour, while maintaining the temperature at 140 °C. Then the monomeric di-isocyanate (MDI) component was added to the reactor and the resulting mixture was reacted under stirring for 1 hour at a temperature of 140°C. After this step, the polyurethane prepolymer component was added to the reactor und mixed under vacuum and stirring for 30 minutes at a temperature of 140°C. Then the silane component was added to the reactor and the resulting mixture was stirred without vacuum for 45 minutes at a temperature of 140°C followed by stirring for 15 minutes under vacuum at the same temperature. The obtained reaction product was filled in tubes and stored at room temperature in the absence of moisture.

### Measurement methods

The moisture curing hot-melt adhesives were characterized using the following measurement methods.

### Viscosity at 130°C

The sample adhesive composition provided in a sealed tube was preheated in an oven at a temperature of 140°C for a time period of 20 minutes. After the heating, a sample of 12.3 g of the adhesive composition was weighted and placed in a disposable sleeve to a viscometer. The viscosity was measured at temperature of 130°C at 5 revolutions per minute using a Brookfield DV-2 Thermosel viscometer with a spindle No. 27. The values obtained 20 minutes tempering at the measurement temperature and five minutes of measurement were recorded as representative viscosities.

### Open time

The sample adhesive composition provided in a sealed tube was first preheated in an oven to at temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the paper strip could be removed from the adhesive film without damaging the paper strip or the adhesive film. The time interval between the starting point of the measurement and the last sampling point was recorded as the open time (in seconds) of the adhesive composition The values of open time presented in Tables 3 and 4 have been obtained as an average of three measurements conducted with the same hot-melt adhesive composition.

### Rest tackiness

The rest tackiness was measured according to the "method for determining the rest tackiness", as described above.

The values of rest tackiness presented in Tables 3 and 4 have been obtained as an average of three measurements conducted with the same hot-melt adhesive composition.

### Curing time

The sample adhesive composition provided in a sealed tube was preheated in an oven to at temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and stored at standard climatic conditions (23°C, 55 % relative humidity). The point of time when the adhesive film was solidified was recorded as the starting point of the measurement. At defined sampling times, a test strip having dimensions of 10 cm x 1 cm was cut from the silicone paper strip and placed on a heating plate having a temperature of 150°C. The procedure was continued until the adhesive film on the test strip no longer melted on the heating plate. The length of time interval between the starting point and the last sampling point was recorded as the curing time (in hours) of the adhesive composition.

The values of curing time presented in Tables 3 and 4 have been obtained as an average of 3 measurements conducted with the same hot-melt adhesive composition.

### Green strength

The adhesive composition provided in a sealed tube was preheated in an oven to at a temperature of 140°C for a time period of 20 minutes. After the heating, a sample of the molten adhesive was applied on the surface of a wood specimen (pine) having dimensions of 9 cm x 2 cm x 5 mm. The adhesive was applied as a film having dimensions of 2 cm x 2 cm and a thickness of 1 mm.

Immediately after the application of the adhesive a second wood specimen having same dimensions as the first wood specimen (pine) was positioned over the first wood specimen along the edge of the adhesive film. The second wood specimen was pressed firmly against the first wood specimen to remove air from adhesive bond. A weigh of 150 g was placed on the top surface of the second wood specimen. Any adhesive squeezed out from the joint was trimmed off with a knife. The test specimens consisting of bonded wood specimens were stored for 30 minutes in standard climatic condition (23°C, 55% relative humidity) before measuring the tensile shear strength.

The tensile strength of each test specimen was determined using a material testing apparatus (Zwick Z 020) fulfilling the requirements of the DIN 51221 standard and using a traversing speed of 10 mm/min. The measured tensile strength corresponds to the maximum tensile stress sustained by the test specimen during the measurement and the measured values were rounded up to the next 0.1 N/mm².

The values of green strength presented in Tables 3 and 4 have been obtained as an average of 3 measurements conducted with the same hot-melt adhesive composition.

### Softening point

The softening point of the exemplary hot-melt adhesive compositions was measured by to Ring-And-Ball method according to EN DIN 1238.

### Heat stability under static load (wood-wood)

The adhesive composition provided in a sealed tube was preheated in an oven at a temperature of 140°C for a time period of 20 minutes. After the heating, a sample of molten adhesive was applied on the surface of a wood specimen (pine) having dimensions of 9 cm x 2 cm x 5 mm and having a 1 mm copper wire on its surface as a spacer. The adhesive was applied as a film having dimensions of 2 cm x 2 cm and a thickness of 1 mm.

Immediately after the application of the adhesive a second wood specimen (pine) having same dimensions as the first wood specimen was positioned on the first wood specimen along the edge of the adhesive film. The second wood specimen was pressed firmly against the first wood specimen to remove air from adhesive bond. A weigh of 150 was placed on the top surface of the second wood specimen. Any adhesive squeezed out from the joint was trimmed off with a knife. The test specimens consisting of bonded wood specimens were then stored for 14 days in controlled standard ambient conditions (23°C, 40-60 % relative humidity).

The test specimens were suspended vertically from one end of the first wood specimen on a metal hook and placed in an oven. A metal weight corresponding to a static load of 1 kg was attached to the lower end of the second wood specimen of each test specimen. Three test specimens at a time were placed in the oven for the heat stability measurement.

In the heat stability measurement, the oven was first heated to a temperature, which is 40°C below the anticipated bond failure temperature. The test specimens were kept at this starting temperature for 60 minutes. In case no bond failure occurred, the temperature of the oven was increased by 10°C and the measurement was continued for another 60 minutes. The temperature of the oven was increased in steps of 10°C following the procedure as described above until a bond failure occurred. The last measured temperature before the bond failure occurred was recorded as the heat stability temperature.

The values for heat stability presented in Tables 3 and 4 have been obtained as an average of measurements conducted with three identical test specimens prepared with samples of the same hot-melt adhesive composition.

### SAFT (shear adhesion failure temperature, wood-wood)

Test specimens consisting of two bonded wooden specimens as described above for heat stability measurement were used for measuring the SAFT.

The test specimens were suspended vertically from one end of the first wood specimen on a metal hook and placed in an oven, which was preheated to a temperature of 40°C. A metal weight corresponding to a static load of 1 kg was attached to the lower end of the second wood specimen. Three test specimens at a time were placed in the oven for the SAFT measurement.

At the beginning of the measurement, the test specimens were kept in the oven at a temperature of 40°C for a time period of 30 minutes. Then the temperature of the oven was increased at a rate of 0.37 % per minute. The temperature was increased until the adhesive bonds of all test specimens in the oven had been failed. In case the standard deviation calculated from the measured adhesion failure temperatures of the three test specimens was more than 5.0°C, the test was repeated with three new test specimens. The temperature of the oven at the time of adhesion failure was recorded as the respective SAFT value.

The SAFT values presented in Tables 3 and 4 have been obtained as an average of measurements conducted with three identical test specimens prepared with samples of the same hot-melt adhesive composition.

### Storage stability, 16 hours at 140°C

The storage stability of the tested adhesive compositions was investigated by measuring the increase in viscosity at elevated temperature during a time period of 16 hours.

The adhesive composition provided in a sealed tube was preheated in an oven at a temperature of 140°C for a time period of 20 minutes. After the heating, a sample of 12.3 g of the adhesive composition was placed in a disposable sleeve to a viscometer. The sleeve was kept sealed from atmospheric moisture with an oil film arranged to the surface of the adhesive.

The viscosity was measured at temperature of 140°C at 1 revolution per minute using a Brookfield DV-2 Thermosel viscometer with a spindle No. 27. The measured viscosity values were recorded with a sampling interval of 30 minutes during a time period of 16 hours. The percentage increase of the viscosity during was calculated based on the recorded viscosity values.

The storage stability values presented in Tables 3 and 4 are obtained as an average of 3 measurements conducted with the same hot-melt adhesive composition.

### Residual monomeric diisocyanate content

The amount of unconverted monomeric diisocyanates in the hot-melt adhesive composition was determined by means of HPLC (detection via photodiode array) and the measured values are expressed in % by weight, based on the total weight of the hot-melt adhesive composition.

### Tensile strength and elongation at break

The adhesive composition provided in a sealed tube was preheated in an oven to at temperature of 140°C for a time period of 20 minutes. After the heating, a sample of 40 g of the molten adhesive was applied with a doctor blade to surface of a silicone paper (B700 white, Laufenberg & Sohn KG) strip placed on a heating plate. The silicone paper had dimensions of 60 cm x 10 cm and the adhesive was applied as a film having a thickness of 500 µm and dimensions of 60 cm x 6 cm. Immediately after the application of the adhesive, the silicone paper strip was removed from the heating plate and stored at standard climatic conditions (23°C, 55 % relative humidity).

In a method based on DIN 53504, five rectangular test specimens having dimensions of 2.0 cm x 8.0 cm were cut from a cured adhesive film having a thickness of 500 µm (cured for 14 days at 23°C/50% relative humidity) of the sample. These specimens were clamped into the tensile testing machine (Zwick Z 020) and pulled apart with a speed of 100 mm/min (test conditions 23°C/50% relative humidity). The parameter measured was the maximum tensile stress sustained by the test specimen during the measurement, which was used to determine tensile strength and elongation at break.

The values of tensile strength and elongation at break presented in Tables 3 and 4 have been obtained as an average of five measurements conducted with the same hot-melt adhesive composition.

### Blocking behavior after storing 20 minutes at 40 °C

The adhesive composition provided in a sealed tube was preheated in an oven at a temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 100 µm and dimensions of 30 cm x 6 cm. Before applying the adhesive film, the silicone paper strip and the doctor blade were heated to a temperature of 150°C with the heating plate.

Immediately after the application of the adhesive, the silicone paper strip was removed from the heating plate and the adhesive film was transferred by reactivation to a first TPO-foil having dimensions of 6.5 cm x 5.0 cm. The first TPO-foil was stored at room temperature (23 °C) until the end of the open time, which had previously been determined using the measurement method as described above. The adhesive film was then contacted with the decor side of a second TPO-foil having same dimensions as the first TPO-foil to form a composite foil. A weigh of 0.5 kg/1.0 kg was placed on second TPO-foil and the composite foil with the weight was placed in a heating oven having a temperature of 40°C. The composite was stored in the oven for a period of 20 minutes after which the TPO-foils were separated from each other by hand.

Depending on the ease of separation of the TPO-foils, the adhesive film was considered to be slightly tacky (very easy separation of foils), little tacky (easy separation of foils), tacky (slightly difficult separation of foils), or very tacky (difficult separation of foils). The test was then repeated using a loading weight of 1.0 kg.

The values of blocking behavior after 20 minutes storage at 40°C presented in Tables 5 and 6 have been obtained from three measurements conducted with same hot-melt adhesive compositions.

### Blocking behavior of adhesive film after cooling

The adhesive composition provided in a sealed tube was preheated in an oven at a temperature of 140°C for a time period of 20 minutes. After the heating, a sample of 20 g of the molten adhesive was applied with a doctor blade to surface of a silicone paper (B700 white, Laufenberg & Sohn KG) strip placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade are heated to a temperature of 150°C with the heating plate.

Immediately after the application of the adhesive, the silicone paper strip was removed from the heating plate and stored at room temperature (23°C) until the end of the open time, which was recorded as the starting point for measuring of the blocking behavior. After a predefined waiting time (max 60 seconds) the decor side of a TPO-foil having dimensions of 6.5 cm x 5.0 cm was contacted with the adhesive film and pressed against the silicone paper strip for a time period of 60 seconds using a weight of 1 kg. The weight was then removed, and the TPO-foil was separated from the adhesive layer. The measurement was then repeated using a longer waiting time.

Depending on the ease of separation of the TPO-foil, the adhesive film was considered to be slightly tacky (very easy separation of foils), little tacky (easy separation of foils), tacky (slightly difficult separation of foils), or very tacky (difficult separation of foils). The measurement was then repeated using a longer waiting time.

The values for blocking behavior after cooling presented in Tables 5 and 6 have been obtained from three measurements conducted with same hot-melt adhesive compositions.

**Table 2**

| **Composition [wt.-%]** | **Ex 1** | **Ex 2** | **Ex 3** | **Ex 4** | **Ex 5** | **Ex 6** | **C Ex 7** | **Ex 8** | **C Ex 9** | **Ex 10** | **C Ex 11** |
|---|---|---|---|---|---|---|---|---|---|---|---|
| Fineplus HM 1853 | 12.36 | 12.79 | 11.78 | 10.6 | 11.95 | 12.53 | 13.25 | | | 16.78 | 17.25 |
| Fineplus HM 1805 | 18.54 | 19.18 | 17.68 | 15.90 | 17.93 | 18.79 | 19.87 | | | | |
| Fineplus HM 2686 | | | | | | | | | | 4.00 | 4.11 |
| Dynacoll 7380 | 9.27 | 9.59 | 8.84 | 7.95 | 8.96 | 9.40 | 9.93 | | | 27.97 | 28.75 |
| Pearlbond 501 | 3.80 | 3.93 | 3.63 | 3.26 | 3.68 | 3.86 | 4.08 | | | | |
| Dynacoll 7360 | 3.56 | 3.69 | 3.40 | 3.06 | 3.45 | 3.61 | 3.82 | 21.42 | 22.03 | | |
| Dynacoll 7150 | | | | | | | | | | 12.79 | 13.14 |
| Desmophen 3600Z MX | | | | | | | | 36.42 | 37.44 | | |
| Dynacoll AC 1920 | | | | | | | | 27.85 | 28.63 | | |
| Silanil 442 | | | | | | | | | | 1.96 | 2.01 |
| Hoopol F-810 | | | | | | | | | | 11.99 | 12.32 |
| Unilin 550 | 2.00 | 1.03 | 3.29 | 5.95 | | | | 2.01 | | 2.0 | |
| Unilin 350 | | | | | 2.00 | | | | | | |
| Unilin 700 | | | | | | 2.00 | | | | | |
| Jeffcat DMDLS | | | | | | | | 0.02 | 0.02 | | |
| Lupranat ME | 0.95 | 0.98 | 0.91 | 0.82 | 0.92 | 0.96 | 1.02 | 12.25 | 11.86 | 12.75 | 12.37 |
| Desmodur LS 2397 | 49.51 | 48.79 | 50.47 | 52.46 | 51.11 | 48.83 | 48.02 | | | 9.75 | 10.02 |

**Table 3**

| **Example** | **Ex 1** | **Ex 2** | **Ex 3** | **Ex 4** | **Ex 5** | **Ex 6** | **C Ex 7** |
|---|---|---|---|---|---|---|---|
| Viscosity measured at 130 °C [MPa·s] | 21300 | 21100 | 11400 | 6000 | 15400 | 21700 | 35000 |
| Open time, 500 µm [seconds] | 20-25 | 50 | 30 | 20 | 40 | 40 | 50 |
| Rest tackiness after open time [seconds] | 20 | 25 | 20 | 20 | 20 | 10-20 | 60 |
| Curing time [hours] | 25-30 | 25-30 | -26 | 28-30 | 51-52 | 22-24 | 28 |
| Green strength after 30 minutes [N/mm²] | 0.61 | 0.58 | 0.56 | 0.68 | 0.42 | 0.61 | 0.5 |
| Softening point [°C] | 81 | 78.7 | 85.5 | 91.1 | 68.3 | 81.8 | 77 |
| Heat stability under static load [°C] | 140 | 140 | 140 | 140 | 130 | 140 | 150 |
| SAFT [°C] | 156 | 161 | 158 | 150 | 152 | 158 | 162 |
| Thermal stability at 140 °C, 16 hours [%] | 330 | 280 | 300 | 95 | 292 | 131 | 65 |
| Residual diisocyanate monomer content [wt.-%] | 0.59 | 0.97 | 0.63 | 0.62 | 0.71 | 0.64 | 0.6 |
| Tensile strength [N/mm²] | 23.9 | 26.5 | 25.3 | 21 | 13.2 | 26.3 | 20 |
| Elongation at break [%] | 395 | 390 | 415 | 410 | 390 | 406 | 350 |

**Table 4**

| **Example** | **Ex 8** | **C Ex 9** | **Ex 10** | **C Ex 11** |
|---|---|---|---|---|
| Viscosity measured at 130 °C [MPa·s] | 3000 | 5000 | 19500 | 30000 |
| Open time, 500 µm [seconds] | 60 | 180 | 20 | 40 |
| Rest tackiness after open time [seconds] | 120 | "longer" | Not tacky | 15 |
| Curing time [hours] | 5-8 | 6-8 | 27-30 | 30 |
| Green strength after 30 minutes [N/mm²] | 0.72 | 0.7 | 1.0 | 0.9 |
| Softening point [°C] | 85.6 | 75.0 | 79 | 75 |
| Heat stability under static load [°C] | 140 | 150 | 170 | 180 |
| SAFT [°C] | 164 | 163 | 175 | 182 |
| Thermal stability at 140 °C, 16 hours [%] | 0 | 0 | 360 | 80 |
| Residual diisocyanate monomer content [wt.-%] | 1.69 | 1.65 | 0.85 | 0.9 |
| Tensile strength [N/mm²] | 10.5 | 13.2 | 17 | 15 |
| Elongation at break [%] | 630 | 675 | 400 | 350 |

**Table 5**

| **Example** | **Ex 1** | **Ex 2** | **Ex 3** | **Ex 4** | **Ex 5** | **Ex 6** | **C Ex 7** |
|---|---|---|---|---|---|---|---|
| **Blocking behavior after storing at 40 °C** | | | | | | | |
| 0.5 kg, 20 min | - | ○ | - | - | ○+ | ○ | ○+ |
| 1.0 kg, 20 min | - | ○(+) | ○ | - | + | ○ | ○+ |

| **Blocking behavior after cooling** | | | | | | | |
|---|---|---|---|---|---|---|---|
| Open time + 10 seconds | -○ | - | - | - | ○ | - | + |
| Open time + 20 seconds | -○ | - | - | - | ○ | - | + |
| Open time + 30 seconds | -○ | - | - | - | ○ | - | ++ |
| Open time + 40 seconds | -○ | - | - | - | ○ | - | ++ |
| Open time + 50 seconds | - | - | - | - | ○ | - | ++ |
| Open time + 60 seconds | - | - | - | - | ○ | - | ++ |

| | | | | | | | |
|---|---|---|---|---|---|---|---|
| - = slightly tacky, ○ = little tacky, + = tacky, ++ very tacky | | | | | | | |

**Table 6**

| **Example** | **Ex 8** | **C Ex 9** | **Ex 10** | **C Ex 11** |
|---|---|---|---|---|
| **Blocking behavior after storing at 40 °C** | | | | |
| 0.5 kg, 20 min | - | + | - | - |
| 1.0 kg, 20 min | - | + | - | ○ |

| **Blocking behavior after cooling** | | | | |
|---|---|---|---|---|
| Open time + 10 seconds | -○ | ++ | - | ○ |
| Open time + 20 seconds | -○ | ++ | - | ○ |
| Open time + 30 seconds | -○ | ++ | - | ○ |
| Open time + 40 seconds | -○ | ++ | - | ○ |
| Open time + 50 seconds | -○ | ++ | - | ○ |
| Open time + 60 seconds | -○ | ++ | - | ○ |

| | | | | |
|---|---|---|---|---|
| - = slightly tacky, ○ = little tacky, + = tacky, ++ very tacky | | | | |

## Claims

1. A method for reducing rest tackiness of a moisture curing polyurethane hot-melt adhesive composition by adding at least one crystalline monofunctional alcohol to a mixture from which the moisture curing polyurethane hot-melt adhesive composition is prepared.

2. The method according to claim 1, wherein the at least one crystalline monofunctional alcohol is added to a mixture containing one or more polyols, and one or more monomeric polyisocyanates, preferably diisocyanates and/or one or more isocyanate-functional polyurethane prepolymers.

3. The method according to claim 1 or 2, wherein the amount of the at least one crystalline monofunctional alcohol is 0.5 - 10.0 % by weight, preferably 0.5 - 7.5 % by weight, more preferably 1.0 - 5.0 % by weight, most preferably 1.0 - 3.0 % by weight, based on the total weight or the mixture.

4. The method according to any of previous claims, wherein the crystalline monofunctional alcohol has a melting point of not less than 60 °C, preferably not less than 70 °C.

5. The method according to any of previous claims, wherein the rest tackiness of the moisture curing polyurethane hot-melt adhesive composition, determined by means of the method cited in the description, is reduced to a value of less than 60 s, preferably less than 50 s, most preferably less than 40 s, by the addition of the at least one crystalline monofunctional alcohol.

6. The method according to any of previous claims comprising:
A) mixing one or more polyols as component a) with one or more crystalline monofunctional alcohols as component b),
B) adding one or more monomeric polyisocyanates, preferably diisocyanates as component c) and/or one or more isocyanate-functional polyurethane prepolymers as component d) to the mixture obtained in step A), the ratio of isocyanate groups to hydroxyl groups in the mixture having a value of at least 1, preferably in the range of 1.5 - 2.5, and carrying out the reaction to obtain a reaction product comprising an isocyanate-functional polyurethane prepolymer modified with crystalline monofunctional alcohol, or
A) reacting one or more polyols as component a) and one or more monomeric polyisocyanates, preferably diisocyanates as component c) and/or one or more isocyanate-functional polyurethane prepolymers as component d), the ratio of isocyanate groups to hydroxyl groups in the mixture having a value of at least 2.5, preferably at least 3.0 to obtain an intermediate reaction product, and
B) adding at least one crystalline monofunctional alcohol as component b) to the intermediate reaction product and carrying out reaction to give a reaction product comprising an isocyanate-functional polyurethane prepolymer modified with crystalline monofunctional alcohol.

7. The method according to claim 6 further comprising admixing at least one poly(meth)acrylate as component e), wherein the reaction between component a) and component c) and/or component d) is conducted in the presence of the at least one poly(meth)acrylate.

8. The method according to claim 7, wherein the at least one poly(meth)acrylate is a homopolymer or copolymer of at least one (meth)acrylic acid ester, hydroxyl-functional (meth)acrylic acid ester or a combination thereof and at least one further comonomer, preferably a copolymer of methylmethacrylate and n-butylmethacrylate and at least one further comonomer.

9. The method according to any of claims 6-8, wherein the amount of the one or more crystalline monofunctional alcohol as component b) is 0.5 - 10.0 % by weight, preferably 0.5 - 7.5 % by weight, more preferably 1.0 - 5.0 % by weight, most preferably 1.0 - 3.0 % by weight, based on the total weight of the components a) to e).

10. The method according to any of claims 6-9, wherein the amount of the one or more monomeric polyisocyanates as component c) is 5.0 - 50.0 % by weight, preferably 5.0 - 40.0 % by weight, more preferably 10.0 - 30.0 % by weight, most preferably 10.0 - 25.0 % by weight, based on the total weight of the components a) to e).

11. Use of one or more crystalline monofunctional alcohols in a moisture curing polyurethane hot-melt adhesive composition for reducing rest tackiness of the adhesive composition.

12. The use according to claim 11, wherein the crystalline monofunctional alcohol has a melting point of not less than 60 °C, preferably not less than 70 °C.

13. The use according to claim 11 or 12, wherein the moisture curing polyurethane hot-melt composition is obtainable by reacting one or more polyols, one or more crystalline monofunctional alcohols, one or more monomeric polyisocyanates, preferably diisocyanates, and/or one or more isocyanate-functional polyurethane prepolymers.

14. The use according to any of claims 11-13, wherein the moisture curing polyurethane hot-melt composition is obtainable by a process comprising:
A) mixing one or more polyols as component a) with one or more crystalline monofunctional alcohols as component b),
B) adding one or more monomeric polyisocyanates, preferably diisocyanates as component c) and/or one or more isocyanate-functional polyurethane prepolymers as component d) to the mixture obtained in step A), the ratio of isocyanate groups to hydroxyl groups in the mixture having a value of at least 1, preferably in the range of 1.5 - 2.5, and carrying out the reaction to obtain a reaction product comprising an isocyanate-functional polyurethane prepolymer modified with crystalline monofunctional alcohol, or
A) reacting one or more polyols as component a) and one or more monomeric polyisocyanates, preferably diisocyanates as component c) and/or one or more isocyanate-functional polyurethane prepolymers as component d), the ratio of isocyanate groups to hydroxyl groups in the mixture having a value of at least 2.5, preferably at least 3.0 to obtain an intermediate reaction product, and
B) adding at least one crystalline monofunctional alcohol as component b) to the intermediate reaction product and carrying out reaction to give a reaction product comprising an isocyanate-functional polyurethane prepolymer modified with crystalline monofunctional alcohol.

15. The use according to claim 14 further comprising admixing one or more poly(meth)acrylates as component e), wherein the reaction between component a) and component c) and/or component d) is conducted in the presence of the one or more poly(meth)acrylates.

16. The use according to any of claim 11-15, wherein the moisture curing polyurethane hot-melt composition has a monomeric polyisocyanate, preferably diisocyanate, content of not more than 5.0 % by weight, preferably not more than 2.5 % by weight, most preferably not more than 1.0 % by weight.

## Patentansprüche

1. Verfahren zur Verringerung der Restklebrigkeit einer feuchtigkeitshärtenden Polyurethan-Heißschmelzklebstoffzusammensetzung durch Zugeben mindestens eines kristallinen monofunktionellen Alkohols zu einer Mischung, aus der die feuchtigkeitshärtende Polyurethan-Heißschmelzklebstoffzusammensetzung hergestellt wird.

2. Verfahren nach Anspruch 1, wobei der mindestens eine kristalline monofunktionelle Alkohol zu einer Mischung gegeben wird, die ein oder mehrere Polyole und ein oder mehrere monomere Polyisocyanate, vorzugsweise Diisocyanate, und/oder ein oder mehrere isocyanatfunktionelle Polyurethan-Prepolymere enthält.

3. Verfahren nach Anspruch 1 oder 2, wobei die Menge des mindestens einen kristallinen monofunktionellen Alkohols 0,5-10,0 Gew.-%, vorzugsweise 0,5-7,5 Gew.-%, weiter bevorzugt 1,0-5,0 Gew.-%, ganz besonders bevorzugt 1,0-3,0 Gew.-%, bezogen auf das Gesamtgewicht oder die Mischung, beträgt.

4. Verfahren nach einem der vorhergehenden Ansprüche, wobei der kristalline monofunktionelle Alkohol einen Schmelzpunkt von nicht weniger als 60 °C, vorzugsweise nicht weniger als 70 °C, aufweist.

5. Verfahren nach einem der vorhergehenden Ansprüche, wobei die mit Hilfe der in der Beschreibung angegebenen Methode bestimmte Restklebrigkeit der feuchtigkeitshärtenden Polyurethan-Heißschmelzklebstoffzusammensetzung durch die Zugabe des mindestens einen kristallinen monofunktionellen Alkohols auf einen Wert von weniger als 60 s, Vorzugsweise weniger als 50 s, ganz besonders bevorzugt weniger als 40 s verringert wird.

6. Verfahren nach einem der vorhergehenden Ansprüche, das Folgendes umfasst:
A) Mischen von einem oder mehreren Polyolen als Komponente a) mit einem oder mehreren kristallinen monofunktionellen Alkoholen als Komponente b),
B) Zugeben von einem oder mehreren monomeren Polyisocyanaten, vorzugsweise Diisocyanaten, als Komponente c) und/oder einem oder mehreren isocyanatfunktionellen Polyurethan-Prepolymeren als Komponente d) zu der in Schritt A) erhaltenen Mischung, wobei das Verhältnis von Isocyanatgruppen zu Hydroxylgruppen in der Mischung einen Wert von mindestens 1, vorzugsweise im Bereich von 1,5-2,5, aufweist, und Umsetzen zum Erhalt eines Reaktionsprodukts, das ein mit kristallinem monofunktionellem Alkohol modifiziertes isocyanatfunktionelles Polyurethan-Prepolymer umfasst, oder
A) Umsetzen von einem oder mehreren Polyolen als Komponente a) und einem oder mehreren monomeren Polyisocyanaten, vorzugsweise Diisocyanaten, als Komponente c) und/oder einem oder mehreren isocyanatfunktionellen Polyurethan-Prepolymeren als Komponente d), wobei das Verhältnis von Isocyanatgruppen zu Hydroxylgruppen in der Mischung einen Wert von mindestens 2,5, vorzugweise mindestens 3,0, aufweist, zum Erhalt eines Reaktionszwischenprodukts und
B) Zugeben von mindestens einem kristallinen monofunktionellen Alkohol als Komponente b) zu dem Reaktionszwischenprodukt und Umsetzen zum Erhalt eines Reaktionsprodukts, das ein mit kristallinem monofunktionellem Alkohol modifiziertes isocyanatfunktionelles Polyurethan-Prepolymer umfasst.

7. Verfahren nach Anspruch 6, ferner umfassend das Beimischen mindestens eines Poly(meth)acrylats als Komponente e), wobei die Umsetzung zwischen Komponente a) und Komponente c) und/oder Komponente d) in Gegenwart des mindestens einen Poly(meth)-acrylats durchgeführt wird.

8. Verfahren nach Anspruch 7, wobei es sich bei dem mindestens einen Poly(meth)acrylat um ein Homopolymer oder ein Copolymer von mindestens einem (Meth)acrylsäureester, hydroxylfunktionellen (Meth)acrylsäureester oder einer Kombination davon und mindestens einem weiteren Comonomer, vorzugsweise ein Copolymer von Methylmethacrylat und n-Butylmethacrylat und mindestens einem weiteren Comonomer, handelt.

9. Verfahren nach einem der Ansprüche 6-8, wobei die Menge des einen oder der mehreren kristallinen monofunktionellen Alkohole als Komponente b) 0,5-10 Gew.-%, vorzugsweise 0,5-7,5 Gew.-%, weiter bevorzugt 1,0-5,0 Gew.-%, ganz besonders bevorzugt 1,0-3,0 Gew.-%, bezogen auf das Gesamtgewicht der Komponenten a) bis e), beträgt.

10. Verfahren nach einem der Ansprüche 6-9, wobei die Menge des einen oder der mehreren monomeren Polyisocyanate als Komponente c) 5,0-50,0 Gew.-%, vorzugsweise 5,0-40,0 Gew.-%, weiter bevorzugt 10,0-30,0 Gew.-%, ganz besonders bevorzugt 10,0-25,0 Gew.-%, bezogen auf das Gesamtgewicht der Komponenten a) bis e), beträgt.

11. Verwendung eines oder mehrerer kristalliner monofunktioneller Alkohole in einer feuchtigkeitshärtenden Polyurethan-Heißschmelzklebstoffzusammensetzung zur Verringerung der Restklebrigkeit der Klebstoffzusammensetzung.

12. Verwendung nach Anspruch 11, wobei der kristalline monofunktionelle Alkohol einen Schmelzpunkt von nicht weniger als 60 °C, vorzugsweise nicht weniger als 70 °C, aufweist.

13. Verwendung nach Anspruch 11 oder 12, wobei die feuchtigkeitshärtende Polyurethan-Heißschmelzklebstoffzusammensetzung durch Umsetzen eines oder mehrerer Polyole, eines oder mehrerer kristalliner monofunktioneller Alkohole, eines oder mehrerer monomerer Polyisocyanate, vorzugsweise Diisocyanate, und/oder eines oder mehrerer isocyanatfunktioneller Polyurethan-Prepolymere erhältlich ist.

14. Verwendung nach einem der Ansprüche 11-13, wobei die feuchtigkeitshärtende Polyurethan-Heißschmelzklebstoffzusammensetzung durch ein Verfahren erhältlich ist, das Folgendes umfasst:
A) Mischen von einem oder mehreren Polyolen als Komponente a) mit einem oder mehreren kristallinen monofunktionellen Alkoholen als Komponente b),
B) Zugeben von einem oder mehreren monomeren Polyisocyanaten, vorzugsweise Diisocyanaten, als Komponente c) und/oder einem oder mehreren isocyanatfunktionellen Polyurethan-Prepolymeren als Komponente d) zu der in Schritt A) erhaltenen Mischung, wobei das Verhältnis von Isocyanatgruppen zu Hydroxylgruppen in der Mischung einen Wert von mindestens 1, vorzugsweise im Bereich von 1,5-2,5, aufweist, und Umsetzen zum Erhalt eines Reaktionsprodukts, das ein mit kristallinem monofunktionellem Alkohol modifiziertes isocyanatfunktionelles Polyurethan-Prepolymer umfasst, oder
A) Umsetzen von einem oder mehreren Polyolen als Komponente a) und einem oder mehreren monomeren Polyisocyanaten, vorzugsweise Diisocyanaten, als Komponente c) und/oder einem oder mehreren isocyanatfunktionellen Polyurethan-Prepolymeren als Komponente d), wobei das Verhältnis von Isocyanatgruppen zu Hydroxylgruppen in der Mischung einen Wert von mindestens 2,5, vorzugweise mindestens 3,0, aufweist, zum Erhalt eines Reaktionszwischenprodukts und
B) Zugeben von mindestens einem kristallinen monofunktionellen Alkohol als Komponente b) zu dem Reaktionszwischenprodukt und Umsetzen zum Erhalt eines Reaktionsprodukts, das ein mit kristallinem monofunktionellem Alkohol modifiziertes isocyanatfunktionelles Polyurethan-Prepolymer umfasst.

15. Verwendung nach Anspruch 14, ferner umfassend das Beimischen eines oder mehrerer Poly(meth)acrylate als Komponente e), wobei die Umsetzung zwischen Komponente a) und Komponente c) und/oder Komponente d) in Gegenwart des einen oder der mehreren Poly(meth)acrylate durchgeführt wird.

16. Verwendung nach einem der Ansprüche 11-15, wobei die feuchtigkeitshärtende Polyurethan-Heißschmelzklebstoffzusammensetzung einen Gehalt an monomeren Polyisocyanaten, vorzugsweise Diisocyanaten, von nicht mehr als 5,0 Gew.-%, vorzugsweise nicht mehr als 2,5 Gew.-%, ganz besonders bevorzugt nicht mehr als 1,0 Gew.-%, aufweist.

## Revendications

1. Procédé pour la réduction du caractère collant au repos d'une composition d'adhésif thermofusible de polyuréthane durcissant à l'humidité par ajout d'au moins un alcool monofonctionnel cristallin à un mélange à partir duquel la composition d'adhésif thermofusible de polyuréthane durcissant à l'humidité est préparée.

2. Procédé selon la revendication 1, l'au moins un alcool monofonctionnel cristallin étant ajouté à un mélange contenant un ou plusieurs polyols, et un ou plusieurs polyisocyanates monomériques, préférablement des diisocyanates et/ou un ou plusieurs prépolymères de polyuréthane fonctionnalisé par isocyanate.

3. Procédé selon la revendication 1 ou 2, la quantité de l'au moins un alcool monofonctionnel cristallin étant de 0,5 à 10,0 % en poids, préférablement de 0,5 à 7,5 % en poids, plus préférablement de 1,0 à 5,0 % en poids, le plus préférablement de 1,0 à 3,0 % en poids, sur la base du poids total ou du mélange.

4. Procédé selon l'une quelconque des revendications précédentes, l'alcool monofonctionnel cristallin possédant un point de fusion non inférieur à 60 °C, préférablement non inférieur à 70 °C.

5. Procédé selon l'une quelconque des revendications précédentes, le caractère collant au repos de la composition d'adhésif thermofusible de polyuréthane durcissant à l'humidité, déterminé au moyen du procédé cité dans la description, étant réduit à une valeur inférieure à 60 s, préférablement inférieure à 50 s, le plus préférablement inférieure à 40 s, par l'ajout de l'au moins un alcool monofonctionnel cristallin.

6. Procédé selon l'une quelconque des revendications précédentes comprenant :
A) le mélange d'un ou plusieurs polyols en tant que composant a) avec un ou plusieurs alcools monofonctionnels cristallins en tant que composant b),
B) l'ajout d'un ou plusieurs polyisocyanates monomériques, préférablement des diisocyanates en tant que composant c) et/ou d'un ou plusieurs prépolymères de polyuréthane fonctionnalisé par isocyanate en tant que composant d) au mélange obtenu dans l'étape A), le rapport de groupes isocyanate sur groupes hydroxyle dans le mélange ayant une valeur d'au moins 1, préférablement dans la plage de 1,5 à 2,5, et la mise en œuvre de la réaction pour obtenir un produit de réaction comprenant un prépolymère de polyuréthane fonctionnalisé par isocyanate modifié avec un alcool monofonctionnel cristallin, ou
A) la mise en réaction d'un ou plusieurs polyols en tant que composant a) et d'un ou plusieurs polyisocyanates monomériques, préférablement des diisocyanates en tant que composant c) et/ou d'un ou plusieurs prépolymères de polyuréthane fonctionnalisé par isocyanate en tant que composant d), le rapport de groupes isocyanate sur groupes hydroxyle dans le mélange ayant une valeur d'au moins 2,5, préférablement d'au moins 3,0 pour obtenir un produit de réaction intermédiaire, et
B) l'ajout d'au moins un alcool monofonctionnel cristallin en tant que composant b) au produit de réaction intermédiaire et la mise en œuvre d'une réaction pour donner un produit de réaction comprenant un prépolymère de polyuréthane fonctionnalisé par isocyanate modifié avec un alcool monofonctionnel cristallin.

7. Procédé selon la revendication 6 comprenant en outre le mélange d'au moins un poly(méth)acrylate en tant que composant e), la réaction entre le composant a) et le composant c) et/ou le composant d) étant conduite en la présence de l'au moins un poly(méth)acrylate.

8. Procédé selon la revendication 7, l'au moins un poly(méth)acrylate étant un homopolymère ou copolymère d'au moins un ester d'acide (méth)acrylique, ester d'acide (méth)acrylique fonctionnalisé par hydroxyle ou d'une combinaison correspondante et d'au moins un comonomère supplémentaire, préférablement un copolymère de méthacrylate de méthyle et de méthacrylate de n-butyle et d'au moins un comonomère supplémentaire.

9. Procédé selon l'une quelconque des revendications 6 à 8, la quantité de l'alcool ou des alcools monofonctionnels cristallins en tant que composant b) étant de 0,5 à 10,0 % en poids, préférablement de 0,5 à 7,5 % en poids, plus préférablement de 1,0 à 5,0 % en poids, le plus préférablement de 1,0 à 3,0 % en poids, sur la base du poids total des composants a) à e).

10. Procédé selon l'une quelconque des revendications 6 à 9, la quantité du ou des polyisocyanates monomériques en tant que composant c) étant de 5,0 à 50,0 % en poids, préférablement de 5,0 à 40,0 % en poids, plus préférablement de 10,0 à 30,0 % en poids, le plus préférablement de 10,0 à 25,0 % en poids, sur la base du poids total des composants a) à e).

11. Utilisation d'un ou plusieurs alcools monofonctionnels cristallins dans une composition d'adhésif thermofusible de polyuréthane durcissant à l'humidité pour la réduction du caractère collant au repos de la composition d'adhésif.

12. Utilisation selon la revendication 11, l'alcool monofonctionnel cristallin possédant un point de fusion non inférieur à 60 °C, préférablement non inférieur à 70 °C.

13. Utilisation selon la revendication 11 ou 12, la composition thermofusible de polyuréthane durcissant à l'humidité pouvant être obtenue par mise en réaction d'un ou plusieurs polyols, d'un ou plusieurs alcools monofonctionnels cristallins, d'un ou plusieurs polyisocyanates monomériques, préférablement des diisocyanates, et/ou d'un ou plusieurs prépolymères de polyuréthane fonctionnalisé par isocyanate.

14. Utilisation selon l'une quelconque des revendications 11 à 13, la composition thermofusible de polyuréthane durcissant à l'humidité pouvant être obtenue par un procédé comprenant :
A) le mélange d'un ou plusieurs polyols en tant que composant a) avec un ou plusieurs alcools monofonctionnels cristallins en tant que composant b),
B) l'ajout d'un ou plusieurs polyisocyanates monomériques, préférablement des diisocyanates en tant que composant c) et/ou d'un ou plusieurs prépolymères de polyuréthane fonctionnalisé par isocyanate en tant que composant d) au mélange obtenu dans l'étape A), le rapport de groupes isocyanate sur groupes hydroxyle dans le mélange ayant une valeur d'au moins 1, préférablement dans la plage de 1,5 à 2,5, et la mise en œuvre de la réaction pour obtenir un produit de réaction comprenant un prépolymère de polyuréthane fonctionnalisé par isocyanate modifié avec un alcool monofonctionnel cristallin, ou
A) la mise en réaction d'un ou plusieurs polyols en tant que composant a) et d'un ou plusieurs polyisocyanates monomériques, préférablement des diisocyanates en tant que composant c) et/ou d'un ou plusieurs prépolymères de polyuréthane fonctionnalisé par isocyanate en tant que composant d), le rapport de groupes isocyanate sur groupes hydroxyle dans le mélange ayant une valeur d'au moins 2,5, préférablement d'au moins 3,0 pour obtenir un produit de réaction intermédiaire, et
B) l'ajout d'au moins un alcool monofonctionnel cristallin en tant que composant b) au produit de réaction intermédiaire et la mise en œuvre d'une réaction pour donner un produit de réaction comprenant un prépolymère de polyuréthane fonctionnalisé par isocyanate modifié avec un alcool monofonctionnel cristallin.

15. Utilisation selon la revendication 14 comprenant en outre le mélange d'un ou plusieurs poly(méth)acrylates en tant que composant e), la réaction entre le composant a) et le composant c) et/ou le composant d) étant conduite en la présence du ou des poly(méth)acrylates.

16. Utilisation selon l'une quelconque des revendications 11 à 15, la composition thermofusible de polyuréthane durcissant à l'humidité possédant une teneur en polyisocyanate, préférablement en diisocyanate, monomérique non supérieure à 5,0 % en poids, préférablement non supérieure à 2,5 % en poids, le plus préférablement non supérieure à 1,0 % en poids.
